# EUROPÄISCHE PATENTSCHRIFT

(11) **EP 3 566 899 B1**
(45) Veröffentlichungstag und Bekanntmachung des Hinweises auf die Patenterteilung: **22.02.2023**
(21) Anmeldenummer: 18171057.5
(22) Anmeldetag: 07.05.2018
(51) Int. Cl.: B60N 2/68, B64D 11/06

(54) **BEFESTIGUNGSVORRICHTUNG FÜR EINE RÜCKLEHNE EINES FAHRGASTSITZES, VERFAHREN ZUR HERSTELLUNG EINER BEFESTIGUNGSVORRICHTUNG, FAHRGASTSITZ SOWIE SCHIENENFAHRZEUG MIT EINEM FAHRGASTSITZ**
FASTENING DEVICE FOR A BACKREST OF A PASSENGER SEAT, METHOD FOR PRODUCING A FASTENING DEVICE, PASSENGER SEAT AND RAILWAY VEHICLE EQUIPPED WITH PASSENGER SEAT
DISPOSITIF DE FIXATION POUR UN DOSSIER D'UN SIÈGE DE PASSAGER, PROCÉDÉ DE FABRICATION D'UN DISPOSITIF DE FIXATION, SIÈGE DE PASSAGER AINSI QUE VÉHICULE FERROVIAIRE DOTÉ D'UN SIÈGE DE PASSAGER

(43) Veröffentlichungstag der Anmeldung: 13.11.2019
(73) Patentinhaber: Stadler Bussnang AG, 9565 Bussnang (CH)
(72) Erfinder: Lunardon, Andreas, 6971 Hard (AT); Gullo, Giuseppe, 9462 Montlingen (CH)
(74) Vertreter: Hepp Wenger Ryffel AG

(56) Entgegenhaltungen:
- EP-A2- 2 537 618
- WO-A1-2010/108668
- DE-A1-102008 061 609
- DE-A1-102009 035 405

## Beschreibung

Die Erfindung betrifft ein Verfahren zur Herstellung einer Befestigungsvorrichtung, einen Fahrgastsitz sowie ein Schienenfahrzeug mit einem Fahrgastsitz gemäss dem Oberbegriff der unabhängigen Ansprüche.

Fahrgastsitze, insbesondere in Schienenfahrzeugen, sind beanspruchte Bauteile, die einen direkten Einfluss auf den Reisekomfort haben. Die Sitze müssen daher die vorgegebene Stabilität aufweisen, den Brandschutzrichtlinien entsprechen, komfortabel gestaltet sein und gleichzeitig möglichst wenig Gewicht in das Schienenfahrzeug einbringen.

Ein Fahrgastsitz mit einem sehr komplizierten Aufbau ist beispielsweise aus der DE 3151259 bekannt. Durch den komplizierten Aufbau ist die Herstellung des Sitzes sehr teuer. Aus der WO2010/108668 ist weiterhin ein Gestell für einen Fahrgastsitz bekannt.

EP 1 705 093 offenbart einen Fahrgastsitz, der eine als Hohlprofil ausgebildete starre Sitzschale mit Polstern umfasst. Die Sitzschale wird direkt an der Sitzbefestigung befestigt und weist nur sehr spärliche Polster auf. Der Sitz ist somit sehr unkomfortabel und instabil.

DE 10 2013 012 291 offenbart einen Fahrgastsitz mit einer Sitzschale und einem Sitzpolster. Ein derartiger Sitz ist ebenfalls sehr instabil und unbequem.

Es ist daher Aufgabe der Erfindung, die Nachteile des Standes der Technik zu vermeiden und insbesondere einen Fahrgastsitz derart auszugestalten, dass er einfach, stabil und komfortabel gestaltet ist.

Die Aufgabe wird durch die kennzeichnenden Merkmale der unabhängigen Ansprüche gelöst.

Eine Befestigungsvorrichtung umfasst ein Rücklehnenbefestigungselement zur Befestigung einer Rücklehne, einen Körper und zumindest eine Ausnehmung im Körper, wobei die Ausnehmung nicht zur Befestigung weiterer Elemente ausgebildet ist.

Eine derartige Befestigungsvorrichtung ist stabil und gewichtsoptimiert.

Das Rücklehnenbefestigungselement ist derartig ausgebildet, dass eine stabile Rücklehne an ihm befestigt werden kann. Es kann daher eine Klebefläche, eine Schraub- oder Nietverbindung oder eine reine formschlüssige Verbindung umfassen.

Die Ausnehmung ist nicht zur Befestigung weiterer Elemente ausgebildet und umfasst somit kein Gewinde oder andere dezidierte Befestigungseinrichtungen. Bevorzugt ist die Ausnehmung an einem Ort der Befestigungsvorrichtung angeordnet, an dem der Kraftfluss durch die Befestigungsvorrichtung im eingebauten Zustand nicht wesentlich beeinträchtigt wird.

Der Körper kann ein Rücklehnenelement und ein Sitzflächenelement umfassen, wobei insbesondere eine Längsachse des Rücklehnenelementes und eine Längsachse des Sitzflächenelementes in einem Winkel von 90° bis 120° zueinander angeordnet sind, vorzugsweise 100 bis 110°, insbesondere bevorzugt im Wesentlichen 102 °.

Eine derartige Befestigungsvorrichtung führt zu einer guten Stabilität von Rücklehne und Sitzfläche und ist gleichzeitig leicht. Weiterhin ist die Sitzposition sehr komfortabel.

Die mindestens eine Ausnehmung kann eine durchgehende Öffnung sein.

Mit einer durchgehenden Öffnung wird die Befestigungsvorrichtung gewichtsoptimiert.

Die Ausnehmung kann eine Reduktion der Wandstärke des Körpers sein.

Falls noch gewisse Stabilität durch das Material gebraucht wird, kann so weiter Stabilität erhalten und zusätzlich Gewicht eingespart werden. Weiterhin ist selbstverständlich möglich, die durchgehende Öffnung in einem Bereich anzuordnen, die von einer reduzierten Wandstärke des Körpers umgeben oder angrenzend ist. Somit kann je nach berechnetem Kraftfluss genau die Wandstärke verwendet werden, die benötigt ist.

Der Körper kann im Wesentlichen als Doppel-T Träger ausgebildet sein und im Querschnitt zwei Endelemente und einen Verbindungsabschnitt umfassen. Insbesondere ist die mindestens eine Ausnehmung in dem Verbindungsabschnitt angeordnet.

Die Ausbildung als Doppel-T Träger führt zu einer hohen Stabilität genau in der gewünschten Richtung und gleichzeitig einer leichten Verbindungsmöglichkeit des Körpers über den Körper mit einer Rücklehnpolsterung oder einer Sitzflächenpolsterung. Das Anbringen einer Ausnehmung im Verbindungsabschnitt führt zu einer Material- und Gewichtseinsparung und wird bevorzugt an den Stellen angeordnet, an denen der Kraftfluss keinerlei Material erfordert.

Eine derartige Befestigungsvorrichtung ist leicht und sehr stabil.

Die Befestigungsvorrichtung, insbesondere das Rücklehnenelement, kann eine Längenausdehnung von mindestens 30cm und maximal 70cm, bevorzugt mindestens 25cm und/oder maximal 60cm, insbesondere bevorzugt mindestens 36cm und/oder maximal 50cm aufweisen.

Mit einem derartigen Rücklehnenelement lässt sich der Sitz optimal stabilisieren.

Der Körper kann Befestigungselemente zur Befestigung eines Sitzpolsters und/oder Armlehnen umfassen.

Somit lässt sich die Befestigungsvorrichtung an einem Stuhlgestell befestigen und der Fahrgastsitz kann Armlehnen aufweisen, die stabil befestigt sind.

Der Körper kann Verbindungselemente für Sitzführungen und/oder für Sitzfixierungen umfassen.

Diese Verbindungselemente können beispielsweise durch Trapezführungen gebildet sein und werden bevorzugt seitlich an die Befestigungsvorrichtung angeschraubt und besitzen Ausnehmungen für die Polsterdemontage. Können aber auch in die Befestigungsvorrichtung integriert werden.

Das Sitzflächenelement kann zumindest einen Befestigungszapfen umfassen. Dieser dient zur Sicherung des Sitzflächenelementes.

Die Aufgabe wird weiterhin durch ein Verfahren zur Herstellung einer Befestigungsvorrichtung eines Fahrgastsitzes, umfassend eineBefestigungsvorrichtung wie vorhergehend beschrieben, gelöst.

Die Befestigungsvorrichtung, insbesondere der Körper, wird durch Schmieden, insbesondere Gesenkschmieden, bevorzugt aus Aluminium oder einer Aluminiumlegierung hergestellt.

Durch das Härten beim Schmieden ist die Befestigungsvorrichtung sehr stabil und trotzdem leicht.

Die Aufgabe wird durch einen Fahrgastsitz für ein Schienenfahrzeug umfassend eine Befestigungsvorrichtung wie vorhergehend beschrieben gelöst.

Der Fahrgastsitz umfasst eine Befestigungsvorrichtung wie vorhergehend beschrieben, eine Rücklehne, eine Rücklehnenpolsterung und eine Sitzfläche, wobei die Rücklehne durch das Rücklehnenbefestigungselement mit der Befestigungsvorrichtung verbunden ist.

Ein derartiger Fahrgastsitz ist sehr komfortabel, leicht und stabil.

Die Befestigungsvorrichtung ist dabei zumindest teilweise zwischen Rücklehne und Rücklehnenpolsterung angeordnet, so dass sie von aussen nicht sichtbar ist. Weiterhin kann auch die Sitzfläche zweigeteilt sein, so dass die Befestigungsvorrichtung ebenfalls zwischen einem unteren Teil der Sitzfläche und einer oberen Sitzflächenpolsterung angeordnet ist. Somit ist der Fahrgastsitz auch sehr ästhetisch gestaltet, da die Befestigungsvorrichtungen von aussen nicht sichtbar sind.

Die Rücklehne ist durch eine Halbschale gebildet. Die Verwendung einer Halbschale macht den Sitz sehr stabil und ermöglicht eine einfache Verbindung mit Befestigungsvorrichtung und Rücklehnenpolsterung. Diese wird bevorzugt über Befestigungszapfen auf der Rückseite an der Rücklehne befestigt.

Die Rücklehenpolsterung kann verstellbar ausgebildet sein.

Verstellbar im Sinne der Erfindung heisst zumindest im Winkel zur Sitzfläche verstellbar, insbesondere im unteren, der Sitzfläche näheren Bereich von der Rücklehne beabstandbar. Insbesondere ist dann die Sitzfläche verschiebbar ausgebildet. Somit kann der Passagier eine bessere und komfortablere Sitzposition selber einstellen.

Die Rücklehne kann ein Laminat, insbesondere ein Hochdrucklaminat umfassen. Insbesondere kann die Rücklehne aus einem Laminat bestehen. Das Laminat kann ein Hochdrucklaminat (HPL) sein und insbesondere ein HPL-Schichtholz Sandwich-Material umfassen. Die Rücklehne kann als dreidimensionaler, dünner Schalenkörper ausgebildet sein, umfasst ein Rückenteil und Seitenwangen und ist an den tragenden Elementen befestigbar. Die Rücklehne kann weiterhin eine oder mehrere Befestigungsstellen zur Anbringung eines Handgriffs aufweisen.

Die Verwendung von Laminat lässt optischen Gestaltungsspielraum und ermöglicht die Formung und Gestaltung der Rücklehne genau nach Bedürfnis.

Die Befestigungsvorrichtung des Fahrgastsitzes kann jeweils einen Abstand zu einem Seitenrand der Rücklehne und/oder einem Seitenrand der Sitzfläche aufweisen.

Der Seitenrand von Rücklehne bzw. Sitzfläche ist der Rand, der bei Benutzung des Sitzes seitlich des Nutzers angeordnet ist. Es handelt sich daher nicht um die Vorderkante, Rückkante oder Oberkante oder Unterkante. Der Abstand beträgt bevorzugt 10 cm, kann aber auch in einem Bereich von 1 cm bis 200 cm aufgeführt werden.

Der Fahrgastsitz kann zwei Befestigungsvorrichtungen umfassen, die in einem Abstand A voneinander angeordnet sind und insbesondere im Bereich der Rücklehne durch einen Querträger miteinander verbunden sind.

Somit erhält der Fahrgastsitz optimierte Stabilität und ist gleichzeitig weiterhin leicht.

Der Abstand A liegt bevorzugt in einem Bereich von 30 bis 50 cm.

Weiterhin ist bei einer symmetrischen Anordnung der zwei Befestigungsvorrichtungen bezüglich der Mitte, also der mittleren Längsachse senkrecht zum Schienenfahrzeugboden im eingebauten Zustand, des Fahrgastsitzes eine gleichmässige Belastung der Befestigungsvorrichtungen vorhanden, so dass die Langlebigkeit erhöht wird.

Die Sitzfläche kann relativ zum Befestigungselement verstellbar, insbesondere verschiebbar, ausgebildet sein.

Somit kann der Sitz auf seinen jeweiligen Passagier eingestellt werden.

Der Fahrgastsitz kann eine Polsterung umfassen, welche ein Rückenpolster zur Befestigung an der Rücklehne, ein Sitzpolster sowie ein Kopfpolster umfassen kann. Die Polsterelemente sind bevorzugt werkzeuglos montier- und demontierbar. Das Kopfpolster ist insbesondere als steckbares Polsterelement ausgeführt, das Rückenpolster kann mittels eines Seilzuges oder Gestänges bedienbare Einrastmechanismen umfassen, die in Aufnahmen der Rückenschale eingreifen.

Optional kann der Fahrgastsitz einen Klapptisch an der dem Poster abgewandten Seite der Rücklehne umfassen, welcher insbesondere mittels einer Überlastsicherung klappbar an dieser angelenkt ist und eine ausziehbare Verlängerung enthalten kann. Bevorzugt ist diese Verlängerung im Tisch verrastet, wobei diese Verrastung von aussen lösbar ist, um die Verlängerung entfernen zu können. Ebenso könne weitere Anbauelement, wie z.B. eine Leseleuchte, vorgesehen sein.

Zur Verbesserung des Stoss- und Schlagschutzes der Rücklehne kann diese an den Kanten verstärkt, insbesondere umgossen werden. Die Rücklehne kann daher eine Kantenverstärkung umfassen, insbesondere eine PUR (Polyurethan) Kantenverstärkung. Dafür wird vorzugsweise eine Nut an den Kanten vorgesehen und dann die Rückenschale in ein mindestens ihren Rand umschliessendes Giessform eingebracht und die Kante mittels eine giessfähigen Materials, insbesondere PUR, umgossen, insbesondere derart, dass sich an der Kante, nicht jedoch auf den Flächen der Rückenschale ein umlaufender Schutzstreifen bildet. Alternativ kann der Schutzstreifen auch aufgeklebt oder mittels Befestigungselementen wie z.B. Schrauben angebracht werden.

Zur Lösung der Aufgabe führt weiterhin ein Schienenfahrzeug mit einem Fahrgastsitz wie vorhergehend beschrieben.

Ein derartiges Schienenfahrzeug weist optimierte Sitzplätze vor, die in grosser Anzahl verbaut werden können ohne das Gewichtslimit des Schienenfahrzeuges zu sehr zu belasten.

Die Erfindung wird im Folgenden an Hand von Figuren genauer beschrieben. Dabei zeigt
- Figur 1:: Eine Befestigungsvorrichtung in Seitenansicht,
- Figur 2:: eine Befestigungsvorrichtung aus Fig. 1 in perspektivischer Darstellung,
- Figur 3:: eine frontale Ansicht der Befestigungsvorrichtung aus Fig. 1,
- Figur 4:: eine Explosionszeichnung eines Fahrgastsitzes,
- Figur 5:: eine Explosionszeichnung einer alternativen Ausführungsform eines Fahrgastsitzes,
- Figur 6:: eine Teilansicht eines Fahrgastsitzes gemäss einer ersten Ausführungsform,
- Figur 7:: eine Teilansicht einer weiteren alternativen Ausführungsform eines Fahrgastsitzes, und
- Figur 8:: eine Teilansicht einer weiteren Ausführungsform eines Fahrgastsitzes.

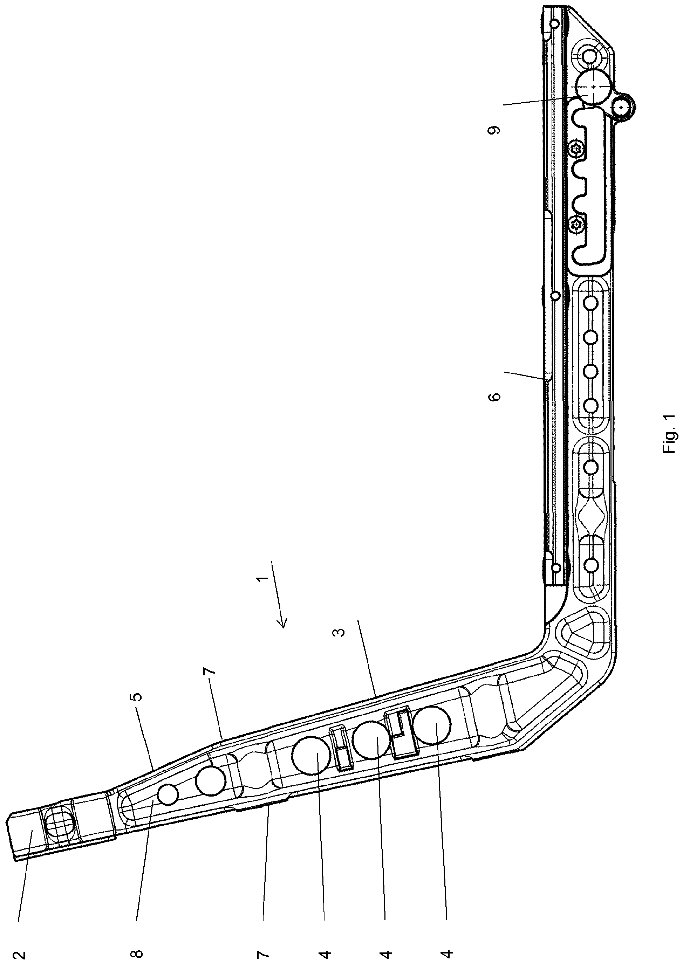

Figur 1 zeigt eine Ausführungsform einer Befestigungsvorrichtung 1 mit einem Rücklehnenbefestigungselement 2 und einem Körper 3. Der Körper 3 umfasst drei Ausnehmungen 4, die gleich gross sind, sowie an seinem dem Rücklehnenbefestigungselement 2 hin orientierten Ende zwei weitere Ausnehmungen 4, die kleiner sind als die ersten drei Ausnehmungen 4. Die Ausnehmungen 4 sind Öffnungen, wobei der Durchmesser der Öffnung bis zu 25 mm gross abhängig ist von der Ausdehnung des Verbindungsabschnitts 8. Die Ausnehmungen 4, die als Öffnungen gestaltet sind, sind weiterhin von weiteren Ausnehmungen umgeben, in denen die Wandstärke des Verbindungsabschnitts 8 reduziert worden ist. Die Wandstärke des Verbindungsabschnitts 8 kann in einem Bereich von im Wesentlichen 3-50mm Der Körper 3 der Befestigungsvorrichtung 1 umfasst ein Rücklehnenelement 5 sowie ein Sitzflächenelement 6. Das Rücklehnenelement 5 weist zum Sitzflächenelement 6 einen Winkel von 102. Das Sitzflächenelement 6 weist weiter einen Befestigungszapfen 9 auf, welcher zur Fixierung des Sitzflächenelementes dient. Die Befestigungsvorrichtung 1 ist durch Schmieden hergestellt worden, so dass die Festigkeit erzielt wird, die für die Verwendung dieser Befestigungsvorrichtung 1 notwendig ist. Die Befestigungsvorrichtung 1 ist aus einer Aluminiumlegierung hergestellt.

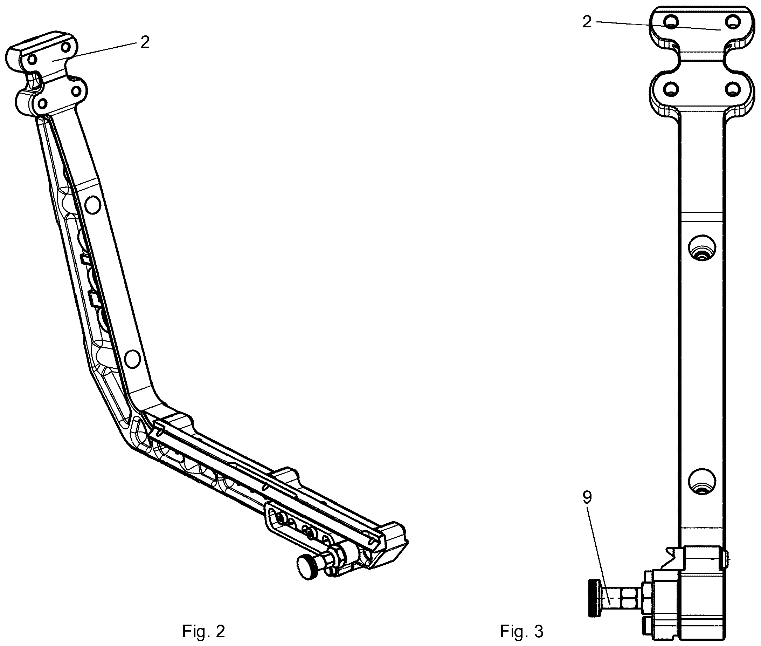

Figur 2 zeigt die Befestigungsvorrichtung aus Figur 1 in einer perspektivischen Darstellung. Insbesondere das Rücklehnenbefestigungselement 2 umfasst eine Kontaktfläche für eine daran anzubringende Rücklehne 11 (nicht dargestellt). Die Rücklehne 11 wird mit dem Befestigungselement 2 verschraubt.

Figur 3 zeigt eine Frontalansicht des Befestigungselementes 1 aus Figur 1, wobei hier insbesondere das Rücklehnenbefestigungselement 2 und der Befestigungszapfen 9 leicht erkennbar sind.

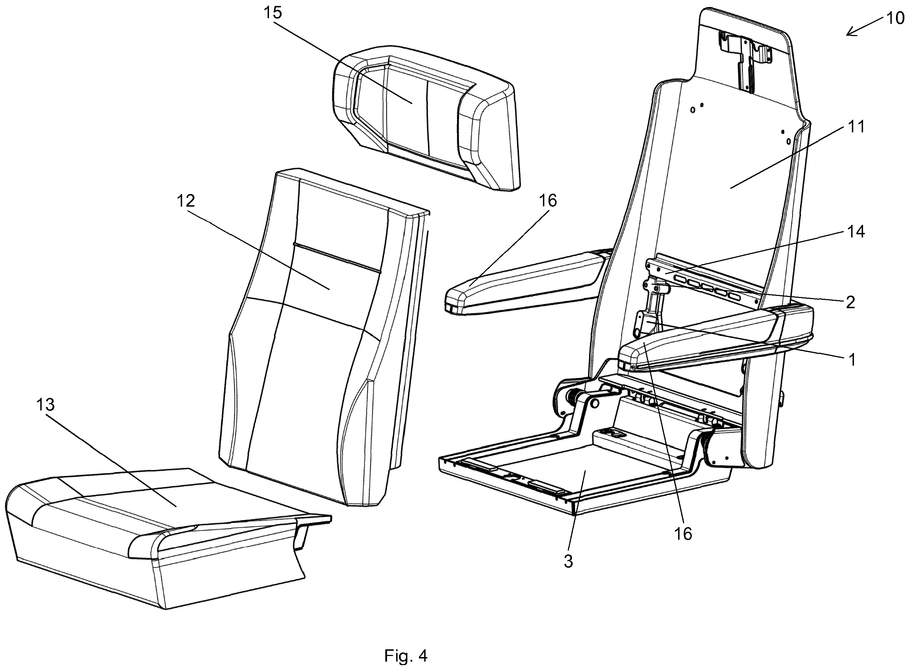

Figur 4 zeigt eine Explosionszeichnung eines Fahrgastsitzes 10, mit einer Befestigungsvorrichtung 1. Eine zweite Befestigungsvorrichtung 1 ist symmetrisch zur Längsachse der Rücklehne 11 ebenfalls vorhanden, jedoch nicht sichtbar. Die Befestigungsvorrichtung 1 ist über ihr Rücklehnenbefestigungselement 2 mit der Rücklehne 11 verbunden. Die Rücklehne 11 besteht aus einer Halbschale, aus HPL (high pressure laminate - Hochdrucklaminat). Die Rücklehne 11 weist Verbindungsvorrichtungen für die Kopfpolster 15 auf. Es ist weiterhin ein Querträger 14 ausgebildet, der die Stabilität des Fahrgastsitzes 10 erhöht. Die Befestigungsvorrichtung 1 umfasst in dieser Ausführungsform ausschliesslich ein Rücklehnenelement 5. Der Fahrgastsitz 10 ist klappbar ausgebildet und kann somit in seiner Neigung der Rücklehne 11 zur Sitzfläche 13 eingestellt werden. Weiterhin umfasst der Fahrgastsitz 10 Armlehnen 16. Die Armlehnen 16 sind insbesondere ebenfalls an der Befestigungsvorrichtung 1 befestigt. Die Befestigungsvorrichtung wird zur Verwendung des Fahrgastsitzes 10 durch Rücklehnenpolsterung 12 abgedeckt. Somit befindet sich die Befestigungsvorrichtung 1 zwischen Rücklehne 11 und Rücklehnenpolsterung 12.

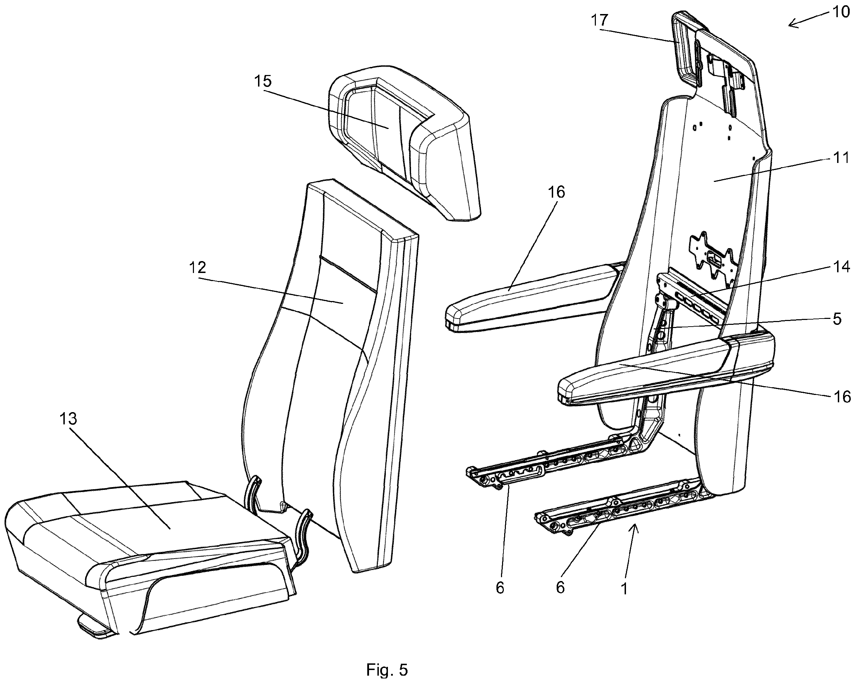

Figur 5 zeigt eine alternative Ausführungsform des Fahrgastsitzes 10, bei dem die Befestigungsvorrichtung 1 ein Rücklehnenelement 5 sowie ein Sitzflächenelement 6 umfasst. Der Fahrgastsitz 10 umfasst zwei Befestigungsvorrichtungen 1, die in einem Abstand A von 30 bis 50 cm. Die Befestigungsvorrichtungen 1 in dieser Ausführungsform entsprechen der Darstellung aus Figur 1. Der Fahrgastsitz 10 umfasst weiterhin einen Querträger 14 und eine Rücklehne 11. Die Rücklehne 11 ist an dem Rücklehnenbefestigungselement 2 der jeweiligen Befestigungsvorrichtung 1 befestigt. Die Rücklehne 11 besteht aus einer Halbschale aus HPL. An der Rücklehne 11 ist weiterhin ein Kopfpolster 15 befestigbar. Zusätzlich ist ein Handgriff 17 an der Rücklehne 11 im Bereich des Kopfpolsters 15 angebracht. Armlehnen 16 sind ebenfalls an der Befestigungsvorrichtung 1 befestigt. Die Befestigungselemente 1 und der Querträger 14 sind zwischen Rücklehne 11 und Rücklehnenpolsterung 12 angeordnet. Somit geben die Elemente Stabilität und sind nicht zu sehen und geben daher eine ästhetische Erscheinung des Sitzes. Das Sitzflächenelement 6 ist mit der Sitzfläche 13 verbunden, wobei die Sitzfläche 13 ebenfalls eine Sitzflächenpolsterung umfasst.

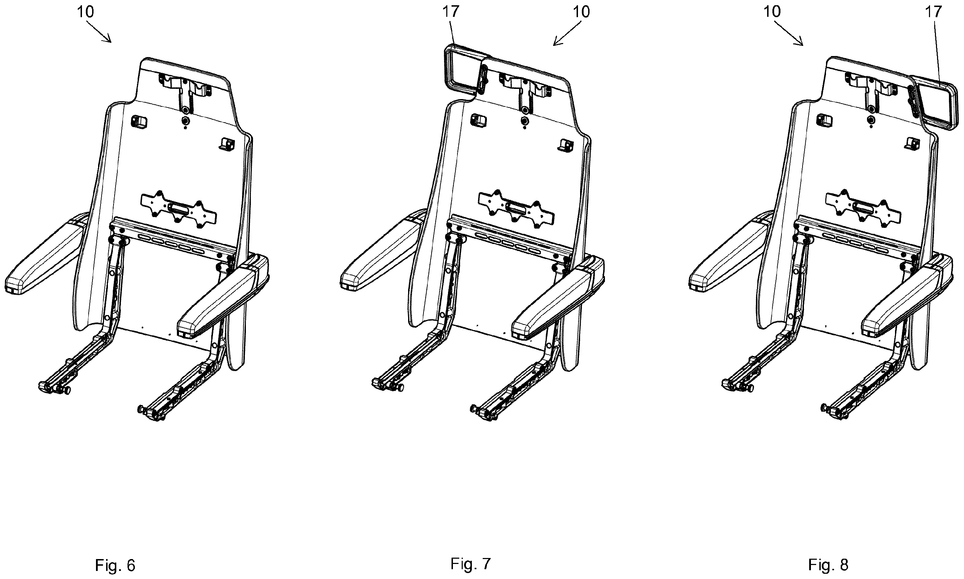

Die Figuren 6 bis 8 zeigen den Fahrgastsitz 10 aus Figur 5, wobei Figur 6 keinen Handgriff zeigt, Figur 7 einen Handgriff 17 im Bereich der Kopfstütze auf einer ersten Seite und Figur 8 einen Handgriff 17 im Bereich einer Kopfstütze auf der zweiten Seite. Sämtliche andere Details entsprechen der Darstellung in Figur 5.

## Patentansprüche

1. Fahrgastsitz (10) für ein Schienenfahrzeug umfassend eine Rücklehne (11), eine Rücklehnenpolsterung (12), eine Sitzfläche (13) und eine Befestigungsvorrichtung (1) für die Rücklehne (11), die Befestigungsvorrichtung (1) umfasst ein Rücklehnenbefestigungselement (2) zur Befestigung der Rücklehne, einen Körper (3) und zumindest eine Ausnehmung (4) im Körper (3), wobei die Rücklehne (11) durch das Rücklehnenbefestigungselement (2) mit der Befestigungsvorrichtung (1) verbunden ist, wobei die Ausnehmung (4) nicht zur Befestigung weiterer Elemente ausgebildet ist, wobei die Rücklehne (11) durch eine Halbschale gebildet ist, welche bevorzugt ein Laminat, insbesondere HPL umfasst **dadurch gekennzeichnet, dass** die Befestigungsvorrichtung dabei zumindest teilweise zwischen Rücklehne und Rücklehnenpolsterung angeordnet ist, so dass sie von aussen nicht sichtbar ist.

2. Fahrgastsitz nach Anspruch 1, **dadurch gekennzeichnet, dass** der Körper (3) ein Rücklehnenelement (5) und ein Sitzflächenelement (6) umfasst, wobei insbesondere eine Längsachse des Rücklehnenelementes und eine Längsachse des Sitzflächenelementes in einem Winkel von 90° bis 120°, vorzugsweise 100 bis 110°angeordnet sind.

3. Fahrgastsitz nach einem der vorhergehenden Ansprüche,
**dadurch gekennzeichnet, dass** die mindestens eine Ausnehmung (4) eine durchgehende Öffnung ist.

4. Fahrgastsitz nach einem der Ansprüche 1 oder 2, **dadurch gekennzeichnet, dass** die Ausnehmung (4) eine Reduktion der Wandstärke des Körpers (3) ist.

5. Fahrgastsitz nach einem der vorhergehenden Ansprüche,
**dadurch gekennzeichnet, dass** der Körper (3) im Wesentlichen als Doppel-T-Träger ausgebildet ist und im Querschnitt zwei Endelemente (7,7') und einen Verbindungsabschnitt (8) umfasst, wobei insbesondere die mindestens eine Ausnehmung (4) in dem Verbindungsabschnitt (8) angeordnet ist.

6. Fahrgastsitz nach einem der vorhergehende Ansprüche, **dadurch gekennzeichnet, dass** der Körper (3) Befestigungselemente zur Befestigung eines Stuhlgestells, bevorzugt in Form von vertikalen Befestigungslöchern, und/oder zur Befestigung von Armlehnen umfasst.

7. Fahrgastsitz nach einem der vorhergehenden Ansprüche,
**dadurch gekennzeichnet, dass** der Körper (3) Verbindungselemente für Sitzführungen, bevorzugt in Form von Ausnehmungen und/oder für Sitzfixierungen umfasst.

8. Fahrgastsitz nach einem der vorhergehenden Ansprüche **dadurch gekennzeichnet, dass** das Sitzflächenelement (6) zumindest einen Befestigungszapfen (9) umfasst.

9. Verfahren zur Herstellung einer Befestigungsvorrichtung (1) eines Fahrgastsitzes nach einem der vorhergehenden Ansprüche, **dadurch gekennzeichnet, dass** die Befestigungsvorrichtung (1), insbesondere der Körper (3), durch Schmieden, insbesondere Gesenkschmieden, bevorzugt aus Aluminium oder eine Aluminiumlegierung, hergestellt wird.

10. Fahrgastsitz (10) nach einem der Ansprüche 1 bis 8, **dadurch gekennzeichnet, dass** die Rücklehnenpolsterung (12) verstellbar ausgebildet ist.

11. Fahrgastsitz (10) nach einem der Ansprüche 1-8 oder 10, **dadurch gekennzeichnet, dass** zwei Befestigungsvorrichtungen (1) ausgebildet sind, die in einem Abstand A voneinander angeordnet sind und insbesondere im Bereich der Rücklehne (11) durch einen Querträger (14) miteinander verbunden sind.

12. Fahrgastsitz (10) nach einem der Ansprüche 1 bis 8 oder 10 bis 11, **dadurch gekennzeichnet, dass** die Sitzfläche (13) relativ zum Befestigungselement (1) verstellbar, insbesondere verschiebbar, ausgebildet ist.

13. Schienenfahrzeug mit einem Fahrgastsitz nach einem der Ansprüche 1 bis 8 oder 10-12.

## Claims

1. A passenger seat (10) for a rail vehicle comprising a backrest (11), a backrest upholstery (12), a seat surface (13) and a fastening device (1) for the backrest (11), the fastening device (1) comprises a backrest fastening element (2) for fastening the backrest, a body (3) and at least one recess (4) in the body (3), wherein the backrest (11) is connected to the fastening device (1) by the backrest fastening element (2), the fastening device (4) not being designed for fastening further elements, the backrest (11) being formed by a half-shell which preferably comprises a laminate, in particular HPL, **characterized in that** the fastening device is arranged at least partially between the backrest and backrest upholstery so that it is not visible from the outside.

2. Passenger seat according to claim 1, **characterised in that** the body (3) comprises a backrest element (5) and a seat surface element (6), wherein in particular a longitudinal axis of the backrest element and a longitudinal axis of the seat surface element are arranged at an angle of 90° to 120°, preferably 100 to 110°.

3. Passenger seat according to one of the preceding claims, **characterised in that** the at least one recess (4) is a continuous opening.

4. Passenger seat according to one of the claims 1 or 2, **characterised in that** the recess (4) is a reduction of the wall thickness of the body (3).

5. Passenger seat according to one of the preceding claims, **characterised in that** the body (3) is substantially formed as a double-T-beam and comprises two end elements (7, 7') and a connecting section (8) in a transverse section, wherein in particular the at least one recess (4) is arranged in the connecting section (8).

6. Passenger seat according to one of the preceding claims, **characterised in that** the body (3) comprises fastening elements for fastening a chair frame, preferably in the form of vertical fastening holes, and/or for fastening armrests.

7. Passenger seat according to one of the preceding claims, **characterised in that** the body (3) comprises connecting elements for seat guides, preferably in the form of recesses and/or for seat fixings.

8. Passenger seat according to one of the preceding claims, **characterized in that** the seat surface element (6) comprises at least one fastening pin (9).

9. Method for producing a fastening device (1) of a passenger seat according to one of the preceding claims, **characterised in that** the fastening device (1), in particular the body (3), is produced by forging, in particular drop forging, preferably from aluminium or an aluminium alloy.

10. Passenger seat (10) according to one of the claims 1 to 8, **characterised in that** the backrest upholstery (12) is adjustable.

11. Passenger seat (10) according to one of the claims 1-8 or 10, **characterised in that** two fastening devices (1) are formed which are arranged at a distance A from one another and are connected to one another, in particular in the region of the backrest (11), by a cross member (14).

12. Passenger seat (10) according to one of the claims 1 to 8 or 10 to 11, **characterised in that** the seat surface (13) is designed to be adjustable, in particular displaceable, relative to the fastening element (1).

13. Rail vehicle with a passenger seat according to one of the claims 1 to 8 or 10-12.

## Revendications

1. Siège de passager (10) pour une véhicule ferroviaire comprenant un dossier (11), un rembourrage de dossier (12), une assise (13) et un dispositif de fixation (1) pour le dossier (11), le dispositif de fixation (1) comprend un élément de fixation de dossier (2) pour fixer le dossier, un corps (3) et au moins un évidement (4) dans le corps (3), le dossier (11) étant relié au dispositif de fixation (1) par l'élément de fixation de dossier (2), l'évidement (4) n'étant pas conçu pour la fixation d'autres éléments, le dossier (11) étant formé par une demi-coque qui comprend de préférence un stratifié, en particulier du HPL, **caractérisé en ce que** le dispositif de fixation est disposé au moins partiellement entre le dossier et le rembourrage de dossier, de sorte qu'il n'est pas visible de l'extérieur.

2. Siège de passager selon la revendication 1, **caractérisé en ce que** le corps (3) comprend un élément de dossier (5) et un élément d'assise (6), un axe longitudinal de l'élément de dossier et un axe longitudinal de l'élément d'assise étant notamment disposés selon un angle de 90° à 120°, de préférence de 100 à 110°.

3. Siège de passager selon l'une quelconque des revendications précédentes, **caractérisé en ce que** ledit au moins un évidement (4) est une ouverture traversante.

4. Siège de passager selon l'une des revendications 1 ou 2, **caractérisé en ce que** l'évidement (4) est une réduction de l'épaisseur de paroi du corps (3).

5. Siège de passager selon l'une quelconque des revendications précédentes, **caractérisé en ce que** le corps (3) est essentiellement réalisé sous la forme d'une poutre en double T et comprend, en section transversale, deux éléments d'extrémité (7, 7') et une section de liaison (8), notamment l'au moins un évidement (4) est disposé dans la section de liaison (8).

6. Siège de passager selon l'une quelconque des revendications précédentes, **caractérisé en ce que** le corps (3) comprend des éléments de fixation pour la fixation d'une structure de siège, de préférence sous la forme de trous de fixation verticaux, et/ou pour la fixation d'accoudoirs.

7. Siège de passager selon l'une quelconque des revendications précédentes, **caractérisé en ce que** le corps (3) comprend des éléments de liaison pour des guides de siège, de préférence sous forme d'évidements et/ou pour des fixations de siège.

8. Siège de passager selon l'une quelconque des revendications précédentes, **caractérisé en ce que** l'élément d'assise (6) comprend au moins un téton de fixation (9).

9. Procédé de fabrication d'un dispositif de fixation (1) d'un siège de passager selon l'une quelconque des revendications précédentes, **caractérisé en ce que** le dispositif de fixation (1), notamment le corps (3), est réalisé par forgeage, notamment par matriçage, de préférence en aluminium ou en alliage d'aluminium.

10. Siège de passager (10) selon l'une des revendications 1 à 8, **caractérisé en ce que** le rembourrage de dossier (12) est réglable.

11. Siège de passager (10) selon l'une des revendications 1 à 8 ou 10, **caractérisé en ce qu'**il est formé deux dispositifs de fixation (1) qui sont disposés à une distance A l'un de l'autre et qui sont reliés entre eux, notamment au niveau du dossier (11), par une traverse (14).

12. Siège de passager (10) selon l'une des revendications 1 à 8 ou 10 à 11, **caractérisé en ce que** l'assise (13) est réglable, notamment coulissante, par rapport à l'élément de fixation (1).

13. Véhicule ferroviaire comportant un siège de passager selon l'une des revendications 1 à 8 ou 10 à 12.
